# EUROPÄISCHE PATENTSCHRIFT

(11) **EP 4 506 128 B1**
(45) Veröffentlichungstag und Bekanntmachung des Hinweises auf die Patenterteilung: **18.03.2026**
(21) Anmeldenummer: 24187977.4
(22) Anmeldetag: 11.07.2024
(51) Int. Cl.: B27D 1/08, B27M 3/00, B27B 1/00, B32B 7/06, B32B 7/12, B32B 21/08, B32B 21/14, B32B 1/00

(54) **VERFAHREN ZUR HERSTELLUNG EINES DEKORTEILS MIT DREIDIMENSIONAL GEFORMTER OBERFLÄCHE**
METHOD FOR MANUFACTURING A DECORATIVE PART HAVING A THREE-DIMENSIONALLY SHAPED SURFACE
PROCÉDÉ DE FABRICATION D'UN ÉLÉMENT DÉCORATIF AVEC UNE SURFACE TRIDIMENSIONNELLE

(30) Priorität: 09.08.2023 DE 102023121198
(43) Veröffentlichungstag der Anmeldung: 12.02.2025
(73) Patentinhaber: Marquardt GmbH, 78604 Rietheim-Weilheim (DE)
(72) Erfinder: Käfer, Wolfgang, 78166 Donaueschingen (DE); Glatthaar, Stefan, 78727 Beffendorf (DE)
(74) Vertreter: Staeger & Sperling Partnerschaftsgesellschaft mbB

(56) Entgegenhaltungen:
- US-A- 4 447 282

## Beschreibung

Die Erfindung betrifft ein Verfahren zur Herstellung eines Dekorteils mit dreidimensional geformter Oberfläche, ein Dekorteil mit dreidimensional geformter Oberfläche sowie ein System aus Umformwerkzeug und Hilfsfolie zur Umformung eines bogenförmig bereitgestellten und nicht fluid- insbesondere nicht gasdichten Materials.

In Fahrzeugen, aber auch bei anderen Anwendungen, werden Dekorteile verwendet, welche für eine die optische Erscheinung bestimmende Dekorschicht ursprünglich bogenförmig vorliegende Materialien wie beispielsweise Folien oder Furniere verwenden.

Da solche Dekorteile bzw. deren sichtseitige Oberfläche und somit auch deren Dekorschichten oftmals dreidimensional ausgestaltet sind und sich entsprechend nicht in lediglich einer Ebene erstrecken, müssen die Folien oder Furniere aus ihrer zunächst bogenförmigen d.h. im Wesentlichen ebenen und flachen Erstreckung in eine dreidimensional verformte bzw. verstreckte und für das Dekorteil geeignete geometrische Form gebracht werden.

Für ein solches Umformen wird im Stand der Technik oftmals ein Hochdruckumformen verwendet, wie es beispielsweise aus der EP 0 371 425 A2 bekannt ist. Gemäß diesem bekannten Verfahren wird ein bogenförmiges Material in einen Formhohlraum eines Umformwerkzeugs, wie es beispielsweise aus der DE 41 13 568 C1 bekannt ist, eingespannt und von einer Seite mittels Gas bzw. Luft mit Hochdruck beaufschlagt, sodass das Material sich verformend gegen einen formgebenden Teil des Formhohlraums gepresst wird.

Bei Furnieren d.h. bei bogenförmig vorliegendem, sehr dünnen Holz und allgemein bei starren, porösen und/oder zur Rissbildung neigenden Materialien ist gemäß dem von der EP 0 371 425 A2 vorgeschlagenen Verfahren jedoch problematisch, dass das Material selbst nicht oder zumindest nicht dauerhaft gasdicht ist. Entsprechend wird das Material bei einer Beaufschlagung mit Hochdruck nicht zuverlässig oder zumindest nicht ausreichend gegen den formgebenden Teil des Formhohlraums gepresst, sodass das Material nicht in erforderlicher Weise und prozesssicher geometrisch umgeformt und ungewollt beschädigt werden kann.

Daher schlägt die Schrift EP 2 322 339 A2 die Verwendung einer Hilfsfolie vor, welche lose auf dem bogenförmigen Material anliegt und dieses abdichtet, sodass der Hochdruck über die Hilfsfolie auf das bogenförmige Material wirkt. Zur Positionierung des bogenförmigen Materials in dem Formhohlraum wird dieses zwischen Werkzeughälften des Umformwerkzeugs eingespannt, wobei durch Schnitte in dem bogenförmig vorliegenden Material Sollbruchstellen und/oder Schwindezonen vorgesehen werden, durch welche sich das bogenförmige Material trotz der Fixierung durch die Werkzeughälften in dem Formhohlraum bestimmungsgemäß verformen kann.

Ein solches Verfahren hat jedoch den Nachteil, dass die Rohteile, welche aus dem bogenförmigen Material bzw. Werkstoff für das Umformen bereitgestellt werden müssen, vergleichsweise groß sind, da diese sich für die Fixierung der Rohteile in dem Formhohlraum aus diesem heraus erstrecken müssen. Weiter ist auch nachteilhaft, dass das Rohteil aus dem bogenförmigen und potentiell zur Rissbildung neigenden Material an Dichtflächen des Umformwerkzeugs verlaufend angeordnet werden muss, sodass die Abdichtung des Formhohlraum erschwert wird.

Diese Nachteile führen einerseits zu einer Materialverschwendung und andererseits zu der Notwendigkeit einer vergleichsweise aufwändigen Abdichtung des Formhohlraums, woraus sich insgesamt höhere Herstellungskosten und ein gesteigerter Wartungsaufwand ergeben.

Verfahren zur Herstellung eines Dekorteils und mit solchen Verfahren hergestellte Dekorteile sind zudem aus dem Dokument US 4 447 282 A bekannt. Ferner sind Verfahren zur Herstellung eines Dekorteils und Aspekte solcher Verfahren auch aus den Schriften WO 2003/ 082 546 A2, DE 37 27 926 A1, JP S55- 121 034 A und JP S60- 157 838 A bekannt.

Der Erfindung liegt deshalb die Aufgabe zugrunde, die vorgenannten Nachteile zu überwinden und ein Verfahren zur kostengünstigen und einfachen Herstellung eines Dekorteils mit dreidimensional geformter Oberfläche ausgehend von einem bogenförmig vorliegenden und nicht fluiddichten, insbesondere zur Rissbildung neigenden Material bereitzustellen.

Diese Aufgabe wird durch die Merkmalskombination gemäß Patentanspruch 1 gelöst.

Erfindungsgemäß wird daher ein Verfahren zur Herstellung eines Dekorteils vorgeschlagen, wobei das Dekorteil eine dreidimensional geformte Oberfläche aufweist und das Verfahren von einem bogenförmig vorliegenden und zumindest nicht dauerhaft fluid- bzw. nicht dauerhaft gasdichten Material ausgeht. Bei dem Material handelt es sich vorzugsweise um ein poröses, starres und/oder zur Rissbildung neigendes Material, insbesondere um ein Naturmaterial und weiter insbesondere um Holz. Bei dem Material kann es sich entsprechend um ein Furnier handeln. Als bogenförmig oder als in Bogenform vorliegend wird zudem verstanden, dass das Material zunächst beispielsweise wie ein Papierbogen als dünne Schicht und sich im Wesentlichen in einer flachen Ebene erstreckend vorliegt, sodass also die Erstreckung des Materials in der Ebene ein Vielfaches der Erstreckung des Materials orthogonal zur Ebene ist. Das erfindungsgemäße Verfahren umfasst dabei zumindest die folgenden Schritte, welche vorzugsweise in der gegebenen Reihenfolge ausgeführt werden:
a. Zuschneiden des Materials zu einem endkonturnahen Rohteil oder Ausschneiden eines endkonturnahen Rohteils aus dem Material, wobei das Rohteil sich in einer Ebene erstreckt;
   Erläuternd ist darauf hinzuweisen, dass das Zuschneiden bzw. Ausschneiden auch als Konturieren des Materials bezeichnet werden kann, da dem Material die Kontur des Rohteils gegeben wird. Als endkonturnah ist zudem insbesondere zu verstehen, dass nach dem später erfolgenden Druckbeaufschlagen des Rohteils und dem damit verbundenen Umformen des Rohteils zu dem Schichtkörper kein oder im Wesentlichen kein weiteres Zuschneiden oder Abtrennen größerer Mengen des Materials mehr notwendig ist. Beispielsweise kann als endkonturnah verstanden werden, dass die Fläche des Rohteils gleich der Fläche des Schichtkörpers in dem Dekorteil oder nur geringfügig größer, z.B. 1% bis 10% oder 1% bis 5% größer ist, als die Fläche des Schichtkörpers in dem Dekorteil.
b. Anordnen des Rohteils an einer fluiddichten, insbesondere gasdichten Hilfsfolie und Ausrichten des Rohteils an bzw. zu der Hilfsfolie, sodass die Hilfsfolie in der Ebene zu jeder Seite über das Rohteil hinausragt und das Rohteil mit einem insbesondere von dem Rohteil freien Abschnitt rahmenförmig umläuft;
   Zum Ausrichten des Rohteils an bzw. zu der Hilfsfolie können an der Hilfsfolie Positionsmarken vorgesehen und beispielsweise aufgedruckt sein oder eine Positionierhilfe, wie beispielsweise eine Positionslehre, verwendet werden. Bei der Hilfsfolie selbst handelt es sich um eine Folie aus beispielsweise Kunststoff, wobei diese elastisch oder plastisch verformbar ausgebildet sein kann, bei einer bestimmungsgemäßen Verformung die Fluid- bzw. Gasdichtigkeit jedoch beibehält.
c. Verbinden der Hilfsfolie mit dem daran ausgerichteten Rohteil zu einer Einheit;
   Durch das Verbinden der Hilfsfolie mit dem Rohteil, beispielsweise mittels eines im Weiteren noch genannten Adhäsives, wird das Rohteil derart an der Hilfsfolie fixiert, dass ein gegen die gas bzw. fluiddichte Hilfsfolie wirkender Druck auf das Rohteil wirken kann. Das Rohteil selbst ist entsprechend auch weiterhin nicht gas- bzw. fluiddicht.
d. Anordnen des mit der Hilfsfolie verbundenen Rohteils in einem Formhohlraum eines Umformwerkzeugs, wobei der Formhohlraum durch die Hilfsfolie gas- bzw. fluiddicht in einen formgebenden ersten Teil und in einen mit Druck zu beaufschlagenden zweiten Teil getrennt wird. Weiter wird das Rohteil mittels der Hilfsfolie in dem ersten Teil des Formhohlraum in eine vorbestimmte Position und Lage gebracht, wobei das Rohteil in dieser Position und dieser Lage vollständig in dem Formhohlraum angeordnet und durch die Hilfsfolie fixiert ist;
   Wesentlich hierbei ist, dass das Rohteil vollständig innerhalb des Formhohlraums angeordnet ist und sich insbesondere nicht zwischen - im Weiteren noch genannten - Dichtflächen des Umformwerkzeugs erstreckt. Abweichend davon, kann sich die Hilfsfolie zwischen die Dichtflächen erstrecken und dadurch integral als Dichtlippe dienen. Weiter vorzugsweise ist das Rohteil bezogen auf seine ebene Erstreckung in dem Formhohlraum zu allen Seiten frei und liegt zumindest zunächst insbesondere nicht unmittelbar am Umformwerkzeug an.
e. Einleiten eines Fluides, insbesondere eines Gases, weiter insbesondere von Luft, in den zweiten Teil des Formhohlraums, sodass die Hilfsfolie an ihrer zu dem zweiten Teil weisenden Seite druckbeaufschlagt wird. Die druck- bzw. hochdruckbeaufschlagte Hilfsfolie presst das Rohteil an ihrer zu dem ersten Teil weisenden Seite formgebend gegen eine Wandung des ersten Teils des Formhohlraums, welche zu der dreidimensional geformten Oberfläche des Dekorteils korrespondiert, wodurch das zuvor ebene Rohteil zu einem Schichtkörper mit einer zu der dreidimensional geformten Oberfläche korrespondierenden Form umgeformt wird.

Zusammenfassend betrifft die Erfindung also ein Verfahren zur Herstellung eines Dekorteils mit dreidimensional geformter Oberfläche ausgehend von einem bogenförmigen und nicht fluiddichten Material. Dabei wird aus dem bogenförmigen Material ein endkonturnahes Rohteil konturiert und dieses einteilig mit einer fluiddichten Hilfsfolie verbunden, wobei die dadurch gebildete Einheit derart in einem Umformwerkzeug bzw. dessen Formhohlraum angeordnet wird, dass das Rohteil vollständig und zu seinen Seiten hin frei in dem Formhohlraum des Umformwerkzeugs angeordnet ist. Anschließend wird die Hilfsfolie an einer von dem Rohteil abgewandten Seite durch ein Fluid mit Druck beaufschlagt, sodass das Rohteil gegen eine formgebende Wandung des Umformwerkzeugs gepresst und zu einem Schichtkörper umgeformt wird.

Dadurch, dass aus dem bogenförmigen Material bereits vor dem Umformen ein endkonturnahes Rohteil konturiert wird, fällt nach dem Umformen kein oder ein deutlich geringerer Verschnitt an, sodass im Vergleich zum Stand der Technik aus einer gegebenen Menge Material mehr Schichtkörper bzw. mehr Dekorteile gefertigt werden können.

Hinzukommt, dass dadurch, dass das Rohteil, welches wie das ursprüngliche Material nicht fluid- bzw. gasdicht ist, vollständig innerhalb des Formhohlraums angeordnet ist, die Dichtung der Werkzeughälften einfacher und wie im Weiteren noch erläutert mit Hilfe der Hilfsfolie erfolgen kann.

Entsprechend ergibt sich eine ressourcenschonende und kostengünstige Fertigung.

Eine vorteilhafte Weiterbildung des Verfahrens sieht zudem ferner die folgenden Schritte, vorzugswese in der gegebenen Reihenfolge vor:
f. Entnehmen des Schichtkörpers mit der Hilfsfolie aus dem Umformwerkzeug;
g. Entfernen der Hilfsfolie und insbesondere der gesamten Hilfsfolie von dem Schichtkörper;
h. Anordnen des Schichtkörpers in einem Spritzwerkzeug;
i. Hinterspritzen oder Umspritzen des Schichtkörpers mit einer Trägerschicht zur Stabilisierung und Verstärkung des Schichtkörpers.

Als Hinterspritzen wird dabei verstanden, dass die Trägerschicht rückseitig an dem Schichtkörper an diesen angespritzt wird und sich nicht bis auf eine Sichtseite des späteren Dekorteils bzw. nicht auf eine Sichtseite des Schichtkörpers erstreckt.

Davon abweichend wird als Umspritzen verstanden, dass die Trägerschicht sowohl rückseitig als auch zumindest abschnittsweise sichtseitig des Schichtkörpers angeordnet ist und sich gegebenenfalls auch rissfüllend in den Schichtkörper hineinerstreckt.

Abhängig von einem zu erreichenden optischen Erscheinungsbild kann der Schichtkörper beispielsweise mit einem farblosen und vorzugsweise transparenten und/oder transluzenten Kunststoff hinterspritzt oder umspritzt werden.

Alternativ hierzu kann vorgesehen sein, dass das Verfahren die folgenden Schritte, vorzugsweise in der gegebenen Reihenfolge umfasst:
f. Entnehmen des Schichtkörpers mit der Hilfsfolie aus dem Umformwerkzeug;
g. Entfernen des freien Abschnitts der Hilfsfolie und insbesondere ausschließlich des freien Abschnitts von dem Schichtkörper;
h. Anordnen des Schichtkörpers mit der Hilfsfolie in einem Spritzwerkzeug;
i. Hinterspritzen oder Umspritzen des Schichtkörpers mit einer Trägerschicht zur Stabilisierung und Verstärkung des Schichtkörpers.

Wie zuvor kann das Hinterspritzen oder Umspritzen beispielsweise mit einem farblosen und vorzugsweise transparenten und/oder transluzenten Kunststoff erfolgen.

Gemäß dieser Variante des Verfahrens verbleibt die ohnehin nicht wiederverwendbare Hilfsfolie sandwischartig zwischen dem Schichtkörper und der Trägerschicht, wodurch beispielsweise beim Hinterspritzen effektiv ein Eindringen des Kunststoffs in den Schichtkörper verhindert werden kann.

Weiter kann die Hilfsfolie auch integral zum Abdichten des Spritzgusswerkzeugs und/oder zur Trennung einer sichtseitigen Fläche des Schichtkörpers von der Rückseite dienen, sodass beim Umspritzen oder Hinterspritzen kein Material unbeabsichtigt auf die Sichtseite gelangen kann.

Bei einem Umspritzen kann beispielsweise auch vorgesehen sein, dass die Trägerschicht lediglich Randbereiche des Schichtkörpers umgreift, sodass diese von der Trägerschicht eingefasst sind und kein Beschnitt des Schichtkörpers notwendig ist, da für die Erhöhung der Prozesssicherheit vorgesehene Überstände an dem Rohteil, welche sich entsprechend auch an dem Schichtkörper wiederfinden, innerhalb der Trägerschicht liegen.

Eine ebenfalls vorteilhafte Weiterbildung des Verfahrens sieht zudem vor, dass das Umformwerkzeug eine erste Werkzeughälfte, welche den ersten Teil des Formhohlraums bestimmt, und eine zweite Werkzeughälfte aufweist, welche den zweiten Teil des Formhohlraums bestimmt. Die Hilfsfolie wird vor Schritt e. und insbesondere während bzw. in Schritt d. zwischen an der ersten Werkzeughälfte und der zweiten Werkzeughälfte vorgesehenen Dichtflächen angeordnet und durch das Schließen der Werkzeughälften zwischen diese gepresst. Die Dichtflächen sind dabei vorzugsweise jeweils an den Formhohlraum umlaufenden Wandungen der Werkzeughälften vorgesehen. Durch die zwischen den Dichtflächen angeordnete Hilfsfolie werden die erste Werkzeughälfte und die zweite Werkzeughälfte gegeneinander und insbesondere auch der Formhohlraum abgedichtet. Entsprechend wirkt die Hilfsfolie zugleich als Dichtmittel und insbesondere als Dichtlippe zur Abdichtung des Formhohlraums. Daher ist es nicht zwingend notwendig und vorzugsweise auch nicht vorgesehen, dass zwischen den Werkzeughälften weitere Dichtmittel zur Abdichtung des Formhohlraums vorgesehen sind.

Zur einfachen Anordnung der Hilfsfolie mit dem daran angeordneten und fixierten Rohteil in dem Formhohlraum kann ferner vorgesehen sein, dass an dem Umformwerkzeug und an der Hilfsfolie zueinander korrespondierende Ausrichthilfen bzw. Ausrichtelemente vorgesehen sind. Beispielsweise kann vorgesehen sein, dass an dem Umformwerkzeug und insbesondere an der ersten Werkzeughälfte beispielsweise als Pins ausgebildete Vorsprünge und an der Hilfsfolie zu den Vorsprüngen korrespondierende und beispielsweise als Langlöcher ausgebildete Ausnehmungen als Ausrichthilfen vorgesehen sind, durch welche die Hilfsfolie und mit ihr das Rohteil in Schritt d. in dem ersten Teil des Formhohlraum in eine vorbestimmte Position und Lage gebracht werden.

Weiter können die Ausrichthilfen bzw. die Vorsprünge und die zugehörigen Ausnehmungen auch kodiert sein, sodass also die Hilfsfolie nur in einer einzigen vorbestimmten Weise an der Werkzeughälfte anordenbar ist.

Obwohl die Ausrichtelemente innerhalb der Dichtflächen vorgesehen sein können, ist es zur Verbesserung der Abdichtung vorteilhaft, wenn die Ausrichtelemente an dem Umformwerkzeug außerhalb der Dichtflächen und außerhalb des Formhohlraums angeordnet sind.

Die Hilfsfolie ist vorzugsweise eine einmalverwendbare und entsprechend nicht wiederverwendbare Opferfolie, wobei diese dennoch recycelbar sein kann.

In Schritt b. wird das Rohteil vorzugsweise mit einem Adhäsiv und/oder einem Klebeband auf die Hilfsfolie aufgeklebt, wobei das Adhäsiv bzw. das Klebeband weiter vorzugsweise temperaturbeständig ist, sodass es den bei der Druckbeaufschlagung entstehenden Temperaturen bestimmungsgemäß standhält und sich das Rohteil nicht von der Hilfsfolie löst.

Das Adhäsiv muss nicht zwingend als Klebeband oder doppelseitiges Klebeband appliziert werden, sondern kann auch beispielsweise als ein Sprühfilm auf das Rohteil oder die Hilfsfolie aufgebracht und dadurch sandwichartig zwischen diesen vorgesehen werden.

Ein weiterer Aspekt der Erfindung betrifft zudem ein Dekorteil, wie es durch die Merkmale des Anspruchs 8 bestimmt ist. Ein solches Dekorteil weist eine dreidimensional geformte Oberfläche mit einer Sichtseite und einer davon abgewandten Rückseite auf, wobei das Dekorteil bzw. Teile des Dekorteils vorzugsweise mit dem erfindungsgemäß vorgeschlagenen Verfahren hergestellt wird. Das Dekorteil weist zu der Sichtseite hin einen Schichtkörper, welcher korrespondierend zu der Oberfläche des Dekorteils dreidimensional geformt ist, und zu der Rückseite hin eine Trägerschicht zur Stabilisierung und Verstärkung des Schichtkörpers auf. Der Schichtkörper ist aus einem zunächst bogenförmig vorliegenden und nicht fluid- und insbesondere nicht gasdichten Material gebildet, wie beispielsweise Holz und im speziellen ein Furnier. Dabei ist der Schichtkörper vorzugsweise porös und/oder weist Risse auf, wobei dadurch gebildete Öffnungen in dem Schichtkörper beispielsweise durch eine sichtseitige Schutzschicht oder die Trägerschicht geschlossen sein können.

Zudem betrifft ein Aspekt der Erfindung ein System gemäß den Merkmalen des Anspruchs 10 aus Umformwerkzeug und Hilfsfolie zur Umformung bzw. zur dreidimensionalen Verstreckung eines bogenförmig vorliegenden und nicht fluid- und insbesondere nicht gasdichten Materials, welcher wie erläutert insbesondere porös ist und/oder zu einer Rissbildung neigt. Um ein solches nicht fluid- bzw. nicht gasdichtes Material bzw. ein daraus bereitgestelltes Rohteil dennoch durch Hochdruckbeaufschlagung mittels eines Fluides umformen zu können, ist vorgesehen, dass das Umformwerkzeug einen zweiteiligen Formhohlraum, eine erste Werkzeughälfte, welche den ersten Teil des Formhohlraums bestimmt, und eine zweite Werkzeughälfte aufweist, welche den zweiten Teil des Formhohlraums bestimmt. Die erste Werkzeughälfte und die zweite Werkzeughälften weisen jeweils Dichtflächen zur unmittelbaren Anlage an der Hilfsfolie auf, welche ausgebildet sind, gegen die Hilfsfolie gepresst zu werden und die Werkzeughälften gegeneinander sowie den Formhohlraum fluiddicht in die zwei Teile unterteilend abzudichten. Dadurch kann das Rohteil vollständig in dem Formhohlraum angeordnet und über die Hilfsfolie mit Druck beaufschlagt gegen den zweiten, formgebenden Teil des Formhohlraums gepresst werden. Weiter ist an bzw. zwischen den Werkzeughälften vorzugsweise kein weiteres Dichtelement und insbesondere keine Dichtlippe oder dergleichen notwendig.

Vorzugsweise wird das vorgeschlagene Umformwerkzeug zur Durchführung des erfindungsgemäßen Verfahrens und/oder zur Herstellung des erfindungsgemäß vorgeschlagenen Dekorteils verwendet. Unabhängig davon, gelten die in Bezug auf das Verfahren erläuterten körperlichen Merkmale des Umformwerkzeugs auch für das von dem System umfasste Umformwerkzeug.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1 - 9: Schritte eines Verfahrens zur Herstellung eines Dekorteils;
- Fig. 10: eine Einheit aus Hilfsfolie und Rohteil;
- Fig. 11: eine Hilfsfolie mit Schichtkörper;
- Fig. 12: ein Dekorteil.

Die Figuren sind beispielhaft schematisch. Gleiche Bezugszeichen in den Figuren weisen auf gleiche funktionale und/oder strukturelle Merkmale hin.

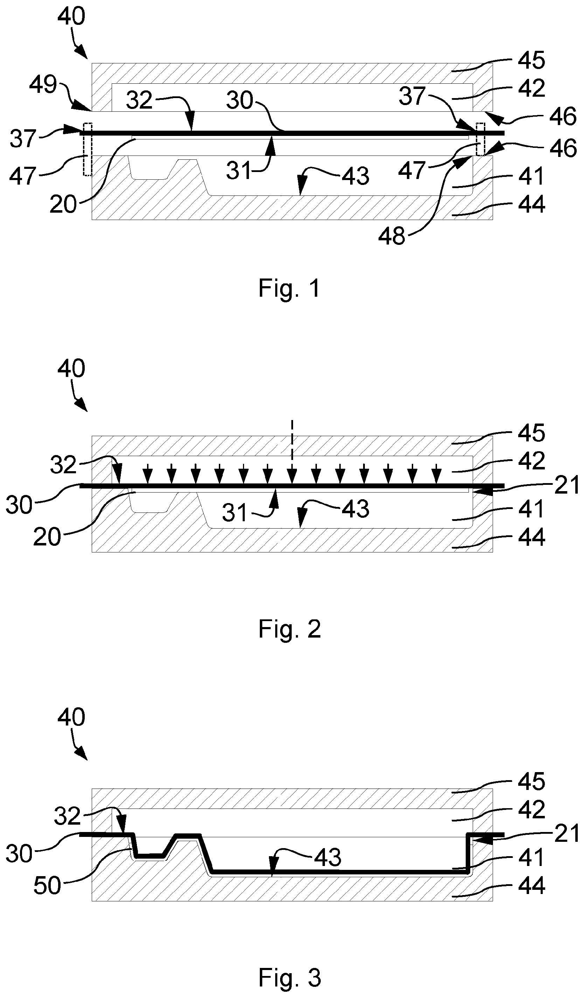

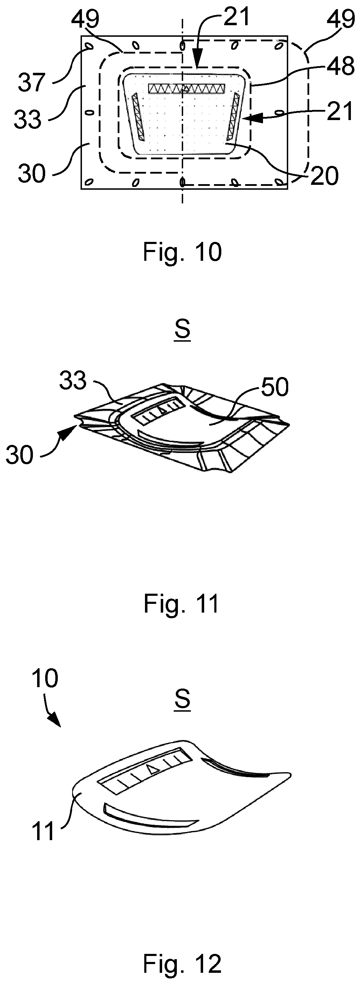

Dabei zeigen die Figuren 1 bis 9 die Schritte eines erfindungsgemäß vorgeschlagenen Verfahrens insbesondere zur Herstellung eines beispielhaft in Figur 12 dargestellten Dekorteils 10, wobei die Figuren 1 bis 9 die Schritte in einer bevorzugten Reihenfolge darstellen und die Figuren 10 und 11 sich insbesondere durch das Verfahren ergebende Zwischenprodukte bei der Herstellung des Dekorteils 10 gemäß Figur 12 abbilden.

Das Dekorteil 10, wie es beispielsweise in Figur 12 abgebildet ist, weist einen mehrschichtigen Aufbau und eine dreidimensional geformte d.h. sich aus einer Ebene herauserstreckende Oberfläche 11 auf. Neben einer rückseitigen Trägerschicht 70 und einer sichtseitigen, durch einen Schichtkörper 50 gebildeten Dekorschicht, kann das Dekorteil 10 auch weitere Schichten und insbesondere eine ebenfalls sichtseitige, den Schichtkörper 50 abdeckende und transparente Schutzschicht aufweisen.

Soll als Ausgangsmaterial für den Schichtkörper 50 ein bogenförmig vorliegendes Naturmaterial, wie beispielsweise Holz, insbesondere in Form eines Furniers verwendet werden, besteht oftmals das Problem, dass solche nicht oder zumindest nicht dauerhaft oder prozesssicher fluiddicht, insbesondere nicht gasdicht, sind. Entsprechend können diese Materialen beispielsweise mit einem im Stand der Technik als Hochdruckumformen bekannten und verbreiteten Tiefziehverfahren nicht prozesssicher in eine benötigte Form gebracht werden, da hierfür die Gasdichtigkeit eine wesentliche Voraussetzung ist.

Das vorgeschlagene Verfahren sieht zunächst vor, dass gemäß Schritt a. aus dem Ausgangsmaterial ein endkonturnahes Rohteil 20 konturiert wird, was durch Zuschneiden des Ausgangsmaterials zu dem Rohteil 20 oder Ausschneiden des Rohteils 20 aus dem Ausgangsmaterial geschehen kann. Da das Rohteil 20 bereits endkonturnah ist und beispielsweise die gleiche Fläche oder nur eine geringfügig größere Fläche aufweist als der Schichtkörper 50 in dem fertigen Dekorteil 10, können aus einer gegebenen Menge des Naturmaterials mehr Rohteile 20 bereitgestellt werden, als bei einer Vielzahl der aus dem Stand der Technik bekannten Verfahren.

Dieses Rohteil 20 wird gemäß den Schritten b. und c. an einer Hilfsfolie 30 angeordnet, zu bzw. an dieser ausgerichtet und mit dieser verbunden, sodass das Rohteil 20 und die Hilfsfolie 30 eine Einheit bilden, wie sie schematisch in Figur 1 sichtbar und beispielsweise in Figur 10 dargestellt ist. Die Hilfsfolie 30 ist bezüglicher ihrer Erstreckung in der Ebene des Rohteils 20 größer als dieses, sodass die Hilfsfolie 30 das Rohteil 20 mit einem freien Abschnitt 33 rahmenförmig umläuft.

Gemäß Schritt d. und wie in Figur 1 und 2 dargestellt, wird die Einheit aus Hilfsfolie 30 und Rohteil 20 in einem Umformwerkzeug 40 bzw. in einem Formhohlraum eines Umformwerkzeugs 40 angeordnet, sodass der Formhohlraum durch die Hilfsfolie 40 in einen ersten Teil 41 und einen zweiten Teil 42 geteilt ist. Bei der Anordnung ist von großer Relevanz, dass das Rohteil 20 mittels der Hilfsfolie 30 derart in dem ersten Teil 41 des Formhohlraums angeordnet ist, dass das Rohteil 41 in der Ebene seiner Erstreckung zu allen (vier) Seiten hin frei ist. Die Randseiten 21 des Rohteils 20 weisen also zu den Formhohlraum bildenden Wandungen des Umformwerkzeugs 40 einen vorbestimmten Abstand auf.

Zur Verdeutlichung dieses Merkmals, dass also das Rohteil 20 vollständig in dem Formhohlraum angeordnet und in der Ebene zu allen Seiten hin frei ist, ist in Figur 10 eine gedachte Wandinnenkante 48 der den Formhohlraum bestimmenden Wandungen des Umformwerkzeugs 40 dargestellt, durch welche deutlich wird, dass das Rohteil 20 sich auch insbesondere nicht zwischen im Weiteren noch erläuterten Dichtflächen 46 des Umformwerkzeugs 40 erstreckt.

Um in Schritt d. ein einfaches und schnelles Anordnen des Rohteils in dessen vorbestimmter Position innerhalb des ersten Teils 41 des Formhohlraums ermöglichen zu können, sind vorliegend zudem Ausrichthilfen 37, 47 in Form von an dem Umformwerkzeug 40 vorgesehenen Pins 47 und dazu korrespondierenden, ovalen Ausnehmungen 37 in der Hilfsfolie 30 vorgesehen. Dadurch, dass also die Hilfsfolie 30 mit den Ausnehmungen 37 über die Pins 47 geführt wird, wird das Rohteil automatisch in die vorbestimmte Position und Lage gebracht.

Die Ausrichthilfen 37, 47 sind in den Figur 1 und 10 beispielhaft dargestellt und können auch abweichend realisiert sein. Beispielsweise können die Pins 47 wie auf der rechten Seite der Figur 1 angedeutet innerhalb der Dichtflächen 46 des Umformwerkzeugs 40 oder wie auf der linken Seite der Figur 1 angedeutet und aufgrund der verbesserten Dichtung vorteilhaft außerhalb der Dichtflächen 46 des Umformwerkzeugs 40 vorgesehen sein.

Diese unterschiedlichen Varianten sind auch in Figur 10 durch die gedachten Linien der Wandinnenkante 48 und der Wandaußenkante 49 angedeutet. Auf der rechten Seite der Darstellung sind die Ausnehmungen 37 innerhalb der durch die Wandinnenkanten 48 und der Wandaußenkanten 49 begrenzten Dichtflächen 46 und auf der linken Seite der Darstellung sind die Ausnehmungen 37 außerhalb der durch die Wandinnenkanten 48 und der Wandaußenkanten 49 begrenzten Dichtflächen 46 vorgesehen.

Wurde das Rohteil 20 in dem ersten Teil 41 des Formhohlraums in diese vorbestimmte Lage und Position gebracht, werden die beiden Werkzeughälften 44, 45 des Umformwerkezugs 40 geschlossen, sodass die Hilfsfolie 30 sich zwischen die Dichtflächen 46 des Umformwerkzeugs 40 erstreckt und den Formhohlraum nach außen hin abdichtet. Entsprechend wirkt die Hilfsfolie 30 als Dichtlippe zur Abdichtung des Formhohlraums, sodass an dem Umformwerkzeug 40 hierfür nicht zwingend zusätzliche Dichtmittel vorhanden sein müssen.

Wie in Figur 2 dargestellt, wird anschließend ein Fluid, insbesondere Gas, weiter insbesondere Luft, in den zweiten Teil 42 des Formhohlraums eingeleitet, sodass also die fluiddichte Hilfsfolie 30 an ihrer zweiten Seite 32 mit Druck beaufschlagt wird. Der auf der zweiten Seite 32 der Hilfsfolie wirkende Druck wird dabei an der ersten Seite 31 des Hilfsfolie 30 auf das Rohteil 20 übertragen, sodass dieses mit der Hilfsfolie 30 in den erstem Teil 41 des Formhohlraums gepresst wird und sich, wie in Figur 3 dargestellt, an eine formgebende Wandung 43, deren Form zu der Oberfläche 11 des Dekorteils 10 korrespondiert, anschmiegt. Abhängig von den Eigenschaften des Ausgangsmaterials kann der Druck anschließend gehalten werden oder gegebenenfalls weitere Schritte erfolgen, bis das an die formgebende Wandung 43 angeschmiegte Rohteil 20 dauerhaft in einen Schichtkörper 50 umgeformt ist, welcher entsprechend eine zu der Oberfläche 11 des Dekorteils 10 korrespondierende Form aufweist.

Dabei erfolgt das Verformen und Umformen unabhängig davon, ob das Ausgangsmaterial bereits vor dem Verfahren undicht ist oder beispielsweise während des Verfahrens durch Rissbildung undicht wird.

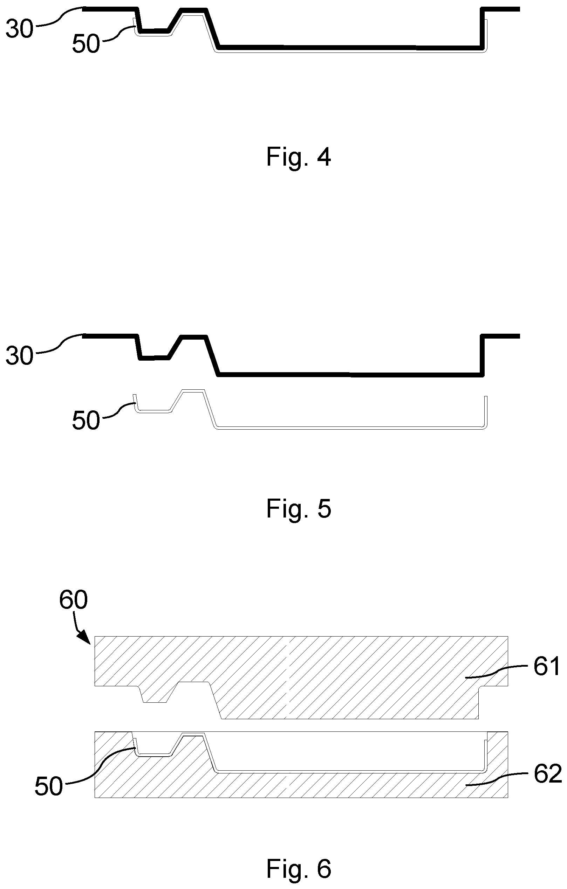

Die weiterhin bestehende Einheit aus der Hilfsfolie 30 und dem zu dem Schichtkörper 50 umgeformten Rohteil 20 wird aus dem Umformwerkzeug 40 entnommen und ist beispielhaft in den Figuren 4 und 11 dargestellt.

Gemäß dem vorliegenden Verfahren wird diese Einheit nun, wie in Figur 5 sichtbar, aufgelöst und der Schichtkörper 50 von der Hilfsfolie 30 getrennt.

Bei der Hilfsfolie 30 handelt es sich vorzugsweise um eine lediglich einmal verwendbare Opferfolie, welche jedoch recyclebar ist, sodass diese nach der Trennung von dem Schichtkörper 50 entsorgt bzw. wiederverwertet werden kann.

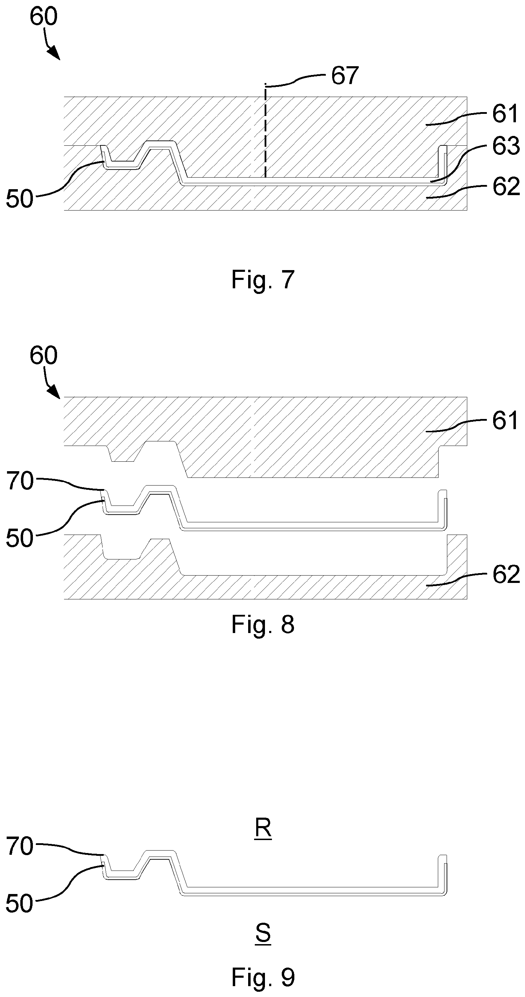

Der nun separierte Schichtkörper 50 kann dann anschließend, wie in Figur 6 dargestellt, zwischen die Werkzeughälften 61, 62 eines Spritzwerkzeugs 60 eingelegt, die Werkzeughälften 61, 62 einen Hohlraum 63 bildend geschlossen und, wie in Figur 7 dargestellt, hinterspritzt werden. Hierfür wird durch eine Zuleitung 67 in den Hohlraum 63 ein Spritzgussmaterial, insbesondere Kunststoff eingeleitet, sodass in dem Hohlraum 63 bzw. in dem Spritzwerkzeug 60 eine einstückig mit dem Schichtkörper 50 verbundene und den Schichtkörper verstärkende Trägerschicht 70 gebildet wird.

Die Einheit aus Schichtkörper 50 und der Trägerschicht 70 kann, wie in Figur 8 dargestellt, aus dem Spritzwerkzeug 60 entnommen werden.

**In** Figur 9 ist die Einheit aus Schichtkörper 50 und der Trägerschicht 70 nochmals einzeln dargestellt, wobei diese bereits im Wesentlichen dem Dekorteil 10 entspricht, wobei die Oberfläche 11 des Dekorteils 10 sichtseitig durch den Schichtkörper 50 bestimmt wird und gegebenenfalls durch eine nicht dargestellte Schutzschicht ergänzt werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Herstellung eines Dekorteils (10) mit dreidimensional geformter Oberfläche (11) ausgehend von einem bogenförmigen und nicht fluiddichten Material, umfassend zumindest die Schritte:
a. Zuschneiden des Materials zu einem endkonturnahen Rohteil (20) oder Ausschneiden eines endkonturnahen Rohteils (20) aus dem Material, wobei das Rohteil (20) sich in einer Ebene erstreckt;
b. Anordnen des Rohteils (20) an einer fluiddichten Hilfsfolie (30) und Ausrichten des Rohteils (20) an der Hilfsfolie (30),
sodass die Hilfsfolie (30) in der Ebene zu jeder Seite über das Rohteil (20) hinausragt und das Rohteil (20) mit einem freien Abschnitt (33) rahmenförmig umläuft;
c. Verbinden der Hilfsfolie (30) mit dem daran ausgerichteten Rohteil (20) zu einer Einheit;
d. Anordnen des mit der Hilfsfolie (30) verbundenen Rohteils (20) in einem Formhohlraum eines Umformwerkzeugs (40),
wobei der Formhohlraum durch die Hilfsfolie (30) fluiddicht in einen formgebenden ersten Teil (41) und in einen mit Druck zu beaufschlagenden zweiten Teil (42) getrennt wird
und wobei das Rohteil (20) mittels der Hilfsfolie (30) in dem ersten Teil (41) des Formhohlraum in eine vorbestimmte Position und Lage gebracht wird, in welchen das Rohteil (20) vollständig in dem Formhohlraum angeordnet und durch die Hilfsfolie (30) fixiert ist;
e. Einleiten eines Fluides in den zweiten Teil des Formhohlraums,
sodass die Hilfsfolie (30) an ihrer zu dem zweiten Teil (42) weisenden Seite (32) druckbeaufschlagt wird,
die druckbeaufschlagte Hilfsfolie (30) das Rohteil (20) an ihrer zu dem ersten Teil (41) weisenden Seite (31) formgebend gegen eine Wandung (43) des ersten Teils (41) presst, welche zu der dreidimensional geformten Oberfläche (11) des Dekorteils (10) korrespondiert,
und das zuvor ebene Rohteil (20) zu einem Schichtkörper (50) mit einer zu der dreidimensional geformten Oberfläche (11) korrespondierenden Form umgeformt wird.

2. Verfahren nach Anspruch 1,
ferner aufweisend die Schritte:
f. Entnehmen des Schichtkörpers (50) mit der Hilfsfolie (30) aus dem Umformwerkzeug (40);
g. Entfernen der Hilfsfolie (30) von dem Schichtkörper (50);
h. Anordnen des Schichtkörpers (50) in einem Spritzwerkzeug (60);
i. Hinterspritzen oder Umspritzen des Schichtkörpers (50) mit einer Trägerschicht (70) zur Stabilisierung und Verstärkung des Schichtkörpers (50).

3. Verfahren nach Anspruch 1,
ferner aufweisend die Schritte:
f. Entnehmen des Schichtkörpers (50) mit der Hilfsfolie (30) aus dem Umformwerkzeug (40);
g. Entfernen des freien Abschnitts (33) der Hilfsfolie (30) von dem Schichtkörper (50);
h. Anordnen des Schichtkörpers (50) mit der Hilfsfolie (30) in einem Spritzwerkzeug (60);
i. Hinterspritzen oder Umspritzen des Schichtkörpers (50) mit einer Trägerschicht (70) zur Stabilisierung und Verstärkung des Schichtkörpers (50).

4. Verfahren nach einem der vorhergehenden Ansprüche,
wobei das Umformwerkzeug (40) eine erste Werkzeughälfte (44), welche den ersten Teil (41) des Formhohlraums bestimmt, und eine zweite Werkzeughälfte (45) aufweist, welche den zweiten Teil (42) des Formhohlraums bestimmt,
und wobei die Hilfsfolie (30) vor Schritt e. zwischen an der ersten Werkzeughälfte (44) und der zweiten Werkzeughälfte (45) vorgesehenen Dichtflächen (46) gepresst wird und die erste Werkzeughälfte (44) und die zweite Werkzeughälfte (45) gegeneinander abdichtet.

5. Verfahren nach einem der vorhergehenden Ansprüche,
wobei an dem Umformwerkzeug (40) und an der Hilfsfolie (30) zueinander korrespondierende Ausrichthilfen (37, 47) vorgesehen sind, durch welche die Hilfsfolie (30) und mit ihr das Rohteil (20) in Schritt d. in dem ersten Teil (41) des Formhohlraum in eine vorbestimmte Position und Lage gebracht werden.

6. Verfahren nach einem der vorhergehenden Ansprüche,
wobei die Hilfsfolie (30) eine einmalverwendbare Opferfolie ist.

7. Verfahren nach einem der vorhergehenden Ansprüche,
wobei das Rohteil (20) in Schritt b. mit einem Adhäsiv und/oder einem Klebeband auf die Hilfsfolie (30) aufgeklebt wird.

8. Dekorteil (10) mit dreidimensional geformter Oberfläche (11) mit einer Sichtseite (S) und einer davon abgewandten Rückseite (R),
wobei das Dekorteil (10) zu der Sichtseite (S) hin einen Schichtkörper (50), welcher korrespondierend zu der Oberfläche (11) des Dekorteils (10) dreidimensional gebildet ist, und zu der Rückseite (R) hin eine Trägerschicht (70) zur Stabilisierung und Verstärkung des Schichtkörpers (50) aufweist,
wobei der Schichtkörper (50) aus einem bogenförmigen und nicht fluiddichten Material geformt ist,
wobei der Schichtkörper (50) porös ist und/oder Risse aufweist und
wobei der Schichtkörper (50) mit der Trägerschicht (70) hinterspritzt ist.

9. Dekorteil nach dem vorhergehenden Anspruch, hergestellt nach dem Verfahren gemäß einem der Ansprüche 1 bis 7.

10. System aus Umformwerkzeug (40) und Hilfsfolie (30) zur Umformung eines bogenförmigen und nicht fluiddichten Materials,
wobei das Umformwerkzeug (40) einen zweiteiligen Formhohlraum, eine erste Werkzeughälfte (44), welche einen ersten Teil (41) des Formhohlraums bestimmt, und eine zweite Werkzeughälfte (45) aufweist, welche einen zweiten Teil (42) des Formhohlraums bestimmt,
wobei die erste Werkzeughälfte (44) und die zweite Werkzeughälften (45) jeweils Dichtflächen (46) zur unmittelbaren Anlage an der Hilfsfolie (30) aufweisen, welche ausgebildet sind, gegen die Hilfsfolie (30) gepresst zu werden und die Werkzeughälften (44, 45) gegeneinander sowie den Formhohlraum fluiddicht in die zwei Teile (41, 42) teilend abzudichten, und
wobei die erste Werkzeughälfte (44) eine formgebende Wandung (43) aufweist, welche zu der dreidimensional geformten Oberfläche (11) eines Dekorteils (10) korrespondiert.

## Claims

1. A method for manufacturing a decorative part (10) with a three-dimensionally moulded surface (11) based on an arc-shaped and non-fluid-tight material, comprising at least the steps:
a. cutting the material into a near-net-shape blank (20) or cutting out a near-net-shape blank (20) from the material, wherein the blank (20) extends in a plane;
b. arranging the blank (20) on a fluid-tight auxiliary film (30) and aligning the blank (20) with the auxiliary film (30),
so that the auxiliary film (30) protrudes beyond each side of the blank (20) in the plane and surrounds the blank (20) with a free section (33) in form of a frame;
c. connecting the auxiliary film (30) with the blank (20) aligned with it into one unit;
d. arranging the blank (20) connected to the auxiliary film (30) in a mould cavity of a forming tool (40),
wherein the auxiliary film (30) separates the mould cavity, in a fluid-tight manner, into a forming first part (41) and a second part (42) that is to be impinged with pressure,
and wherein the blank (20) is, by means of the auxiliary film (30), placed in a predefined position and pose in the first part (41) of the mould cavity in which the blank (20) is completely arranged and is fixed by the auxiliary film (30);
e. introducing a fluid into the second part of the mould cavity,
so that the auxiliary film (30) is pressurised on its side (32) facing the second part (42),
the pressurised auxiliary film (30) presses the blank (20), on its side (31) facing the first part (41), in a forming manner against a wall (43) of the first part (41) which corresponds with the three-dimensionally moulded surface (11) of the decorative part (10),
and the previously plane blank (20) is formed into a layered body (50) with a form corresponding to the three-dimensionally moulded surface (11).

2. The method according to claim 1,
further having the steps:
f. removing the layered body (50) with the auxiliary film (30) from the forming tool (40);
g. removing the auxiliary film (30) from the layered body (50);
h. arranging the layered body (50) in an injection tool (60);
i. back-injecting or overmoulding the layered body (50) with a carrier layer (70) for stabilisation and strengthening the layered body (50).

3. The method according to claim 1,
further having the steps:
f. removing the layered body (50) with the auxiliary film (30) from the forming tool (40);
g. removing the free section (33) of the auxiliary film (30) from the layered body (50);
h. arranging the layered body (50) with the auxiliary film (30) in an injection tool (60);
i. back-injecting or overmoulding the layered body (50) with a carrier layer (70) for stabilisation and strengthening the layered body (50).

4. The method according to any one of the preceding claims,
wherein the forming tool (40) has a first tool half (44) determining the first part (41) of the mould cavity and a second tool half (45) determining the second part (42) of the mould cavity,
and wherein, before step e., the auxiliary film (30) is pressed between sealing areas (46) provided on the first tool half (44) and the second tool half (45) and seals first tool half (44) and the second tool half (45) against each other.

5. The method according to any one of the preceding claims,
wherein alignment aides (37, 47) that correspond to each other are provided on the forming tool (40) and on the auxiliary film (30), which, in step d., bring the auxiliary film (30) and with it the blank (20) into a predefined position and pose in the first part (41) of the mould cavity.

6. The method according to any one of the preceding claims,
wherein the auxiliary film (30) is a single-use sacrificial film.

7. The method according to any one of the preceding claims,
wherein the blank (20), in step b., is adhered to the auxiliary film (30) with an adhesive and/or adhesive tape.

8. A decorative part (10) with a three-dimensionally moulded surface (11) with a visible side (S) and a reverse side (R) facing away from it,
wherein the decorative part (10) has, towards the visible side (S), a layered body (50) that is three-dimensionally formed in correspondence with the surface (11) of the decorative part (10) and, towards the reverse side (R), a carrier layer (70) for stabilising and strengthening the layered body (50),
wherein the layered body (50) is moulded from an arc-shaped and non-fluid-tight material,
wherein the layered body (50) is porous and/or has cracks, and
wherein the layered body (50) is back-injected with the carrier layer (70).

9. The decorative part according to the previous claim, manufactured according to the method according to any one of claims 1 to 7.

10. A system of forming tool (40) and auxiliary film (30) for forming an arc-shaped and non-fluid-tight material,
wherein the forming tool (40) has a two-part mould cavity, a first tool half (44) determining a first part (41) of the mould cavity and a second tool half (45) determining a second part (42) of the mould cavity,
wherein the first tool half (44) and the second tool half (45) each have sealing areas (46) for immediate contact with the auxiliary film (30), which are configured to be pressed against the auxiliary film (30) and to seal the tool halves (44, 45) against each other and the mould cavity, separating the mould cavity into the two parts (41, 42) in a fluid-tight manner, and
wherein the first tool half (44) has a forming wall (43) corresponding to the three-dimensionally moulded surface (11) of a decorative part (10).

## Revendications

1. Procédé de fabrication d'une pièce décorative (10) présentant une surface façonnée tridimensionnelle (11) à partir d'un matériau en forme de feuille et non étanche aux fluides, comprenant au moins les étapes suivantes :
a. le découpage du matériau en une ébauche (20) proche de la forme finale ou découpage d'une ébauche (20) proche de la forme finale à partir du matériau, l'ébauche (20) s'étendant dans un plan ;
b. la disposition de l'ébauche (20) sur un film auxiliaire (30) étanche aux fluides et alignement de l'ébauche (20) sur le film auxiliaire (30), de sorte que le film auxiliaire (30) dépasse de l'ébauche (20) de chaque côté dans le plan et entoure l'ébauche (20) sous forme de cadre avec une section libre (33) ;
c. la liaison du film auxiliaire (30) avec l'ébauche (20) alignée sur celui-ci pour former une unité ;
d. la disposition de l'ébauche (20) reliée au film auxiliaire (30) dans une cavité de moulage d'un outil de formage (40),
la cavité de moulage étant séparée de manière étanche aux fluides par le film auxiliaire (30) en une première partie de moulage (41) et en une seconde partie (42) destinée à être mise sous pression,
et l'ébauche (20) étant amenée, au moyen du film auxiliaire (30), dans une position et un emplacement prédéterminés dans la première partie (41) de la cavité de moulage, dans lesquels l'ébauche (20) est entièrement disposée dans la cavité de moulage et est fixée par le film auxiliaire (30) ;
e. l'introduction d'un fluide dans la seconde partie de la cavité de moulage, de sorte que le film auxiliaire (30) soit mis sous pression sur son côté (32) tourné vers la seconde partie (42),
le film auxiliaire (30) mis sous pression presse l'ébauche (20), sur son côté (31) tourné vers la première partie (41), de manière à lui donner sa forme contre une paroi (43) de la première partie (41) qui correspond à la surface façonnée tridimensionnelle (11) de la pièce décorative (10),
et l'ébauche (20) auparavant plane est formée en un corps stratifié (50) présentant une forme correspondant à la surface façonnée tridimensionnelle (11).

2. Procédé selon la revendication 1,
comprenant en outre les étapes suivantes :
f. le retrait du corps stratifié (50) avec le film auxiliaire (30) de l'outil de formage (40) ;
g. le retrait du film auxiliaire (30) du corps stratifié (50) ;
h. la disposition du corps stratifié (50) dans un outil d'injection (60) ;
i. le surmoulage par l'arrière ou enrobage par injection du corps stratifié (50) avec une couche de support (70) pour la stabilisation et le renforcement du corps stratifié (50).

3. Procédé selon la revendication 1,
comprenant en outre les étapes suivantes :
f. le retrait du corps stratifié (50) avec le film auxiliaire (30) de l'outil de formage (40) ;
g. le retrait de la section libre (33) du film auxiliaire (30) du corps stratifié (50);
h. la disposition du corps stratifié (50) avec le film auxiliaire (30) dans un outil d'injection (60) ;
i. le surmoulage par l'arrière ou enrobage par injection du corps stratifié (50) avec une couche de support (70) pour la stabilisation et le renforcement du corps stratifié (50).

4. Procédé selon l'une des revendications précédentes,
dans lequel l'outil de formage (40) présente une première moitié d'outil (44), laquelle définit la première partie (41) de la cavité de moulage, et une seconde moitié d'outil (45), laquelle définit la seconde partie (42) de la cavité de moulage,
et dans lequel le film auxiliaire (30) est pressé, avant l'étape e., entre des surfaces d'étanchéité (46) prévues sur la première moitié d'outil (44) et la seconde moitié d'outil (45) et assure l'étanchéité de la première moitié d'outil (44) et de la seconde moitié d'outil (45) l'une par rapport à l'autre.

5. Procédé selon l'une des revendications précédentes,
dans lequel des aides à l'alignement (37, 47) correspondant les unes aux autres sont prévues sur l'outil de formage (40) et sur le film auxiliaire (30), par lesquelles le film auxiliaire (30) et, avec lui, l'ébauche (20) sont amenés dans une position et un emplacement prédéterminés dans la première partie (41) de la cavité de moulage à l'étape d.

6. Procédé selon l'une des revendications précédentes,
dans lequel le film auxiliaire (30) est un film sacrificiel à usage unique.

7. Procédé selon l'une des revendications précédentes,
dans lequel l'ébauche (20) est collée sur le film auxiliaire (30) à l'étape b. avec un adhésif et/ou un ruban adhésif.

8. Pièce décorative (10) présentant une surface façonnée tridimensionnelle (11) avec un côté visible (S) et un côté arrière (R) opposé à celui-ci,
la pièce décorative (10) présentant, vers le côté visible (S), un corps stratifié (50) qui est formé de manière tridimensionnelle en correspondance avec la surface (11) de la pièce décorative (10) et, vers le côté arrière (R), une couche de support (70) pour la stabilisation et le renforcement du corps stratifié (50),
le corps stratifié (50) étant formé à partir d'un matériau en forme de feuille et non étanche aux fluides,
le corps stratifié (50) étant poreux et/ou présentant des fissures et
le corps stratifié (50) étant surmoulé par l'arrière avec la couche de support (70).

9. Pièce décorative selon la revendication précédente, fabriquée selon le procédé conformément à l'une des revendications 1 à 7.

10. Système composé d'un outil de formage (40) et d'un film auxiliaire (30) pour le formage d'un matériau en forme de feuille et non étanche aux fluides,
l'outil de formage (40) présentant une cavité de moulage en deux parties, une première moitié d'outil (44) qui définit une première partie (41) de la cavité de moulage et une seconde moitié d'outil (45) qui définit une seconde partie (42) de la cavité de moulage,
la première moitié d'outil (44) et la seconde moitié d'outil (45) présentant chacune des surfaces d'étanchéité (46) destinées à être en appui direct contre le film auxiliaire (30), lesquelles sont configurées pour être pressées contre le film auxiliaire (30) et assurer l'étanchéité des moitiés d'outil (44, 45) l'une par rapport à l'autre ainsi que la division de la cavité de moulage de manière étanche aux fluides en les deux parties (41, 42), et
la première moitié d'outil (44) présentant une paroi de moulage (43) qui correspond à la surface façonnée tridimensionnelle (11) d'une pièce décorative (10).
